Europäisches Patentamt

European Patent Office

Office européen des brevets

(11) Veröffentlichungsnummer: **0 297 251 B1**

(12) **EUROPÄISCHE PATENTSCHRIFT**

(45) Veröffentlichungstag der Patentschrift: **15.07.92**

(21) Anmeldenummer: **88107142.7**

(22) Anmeldetag: **04.05.88**

(51) Int. Cl.⁵: **G01D 5/26**

(54) **Gekapselte Positionsmesseinrichtung.**

(30) Priorität: **03.07.87 DE 3722003**

(43) Veröffentlichungstag der Anmeldung:
**04.01.89 Patentblatt 89/01**

(45) Bekanntmachung des Hinweises auf die
Patenterteilung:
**15.07.92 Patentblatt 92/29**

(84) Benannte Vertragsstaaten:
**DE FR GB IT**

(56) Entgegenhaltungen:
**DE-U- 8 536 525**
**FR-A- 1 601 631**
**GB-A- 2 136 572**

**PATENT ABSTRACTS OF JAPAN, Band 8, Nr.
58 (P-261)[1495], 16. März 1984; & JP-A-58 208
613 (SONII MAGNUESUKEERU K.K.)
05-12-1983**

**PATENT ABSTRACTS OF JAPAN, Band 10,
Nr. 241 (P-488)[2297], 20. August 1986; & JP-
A-61 73 011 (NIPPON KOGAKU K.K.)
15-04-1986**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Affa, Alfred
Hochfellnstrasse 6
W-8221 Stein/Traun(DE)**
Erfinder: **Schopf, Reinhold, Dipl.-Ing.
Ginzing 5
W-8226 Altenmarkt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine gekapselte Positionsmeßeinrichtung gemäß dem Oberbegriff des Anspruchs 1.

Derartige Positionsmeßeinrichtungen werden beispielsweise bei Werkzeugmaschinen zur Messung von Längen eingesetzt und müssen daher gegen schädliche Umwelteinflüsse in Form von Öl, Kühlwasser, Spänen und Staub wirksam geschützt werden. Bei bekannten Längenmeßeinrichtungen weist das Gehäuse für die Maßverkörperung und die Abtasteinheit einen in Längsrichtung verlaufenden Schlitz auf, der durch elastische Dichtlippen verschlossen ist, durch die ein Mitnehmer für die Abtasteinheit hindurchgreift. Diese Dichtlippen verhindern zwar zuverlässig das Eindringen von Staub und Spänen in das Innere des Gehäuses, können aber Flüssigkeiten in Form von Dämpfen und Nebeln, die im Inneren des Gehäuses kondensieren, nicht vollständig fernhalten. Durch Erzeugen und Aufrechterhalten eines Überdrucks im Innenraum des Gehäuses kann die Maßverkörperung und die Abtasteinheit auch weitgehend von Flüssigkeiten in Form von Dämpfen und Spänen freigehalten werden. In der Firmendruckschrift der DR. JOHANNES HEIDENHAIN GmbH "Gekapseltes inkrementales Längenmeßsystem MINILIDA 170" Ausgabe 1978 werden hierzu drei Möglichkeiten eines Druckluftanschlusses aufgezeigt. Zwei Möglichkeiten bestehen darin, wahlweise am rechten oder linken Enddeckel des Gehäuses einen Druckluftanschluß vorzusehen. Die dritte Möglichkeit besteht darin, einen Druckluftanschluß an einer Außenwand des Montageelementes vorzusehen und die Druckluft durch den Innenraum des Montageelementes und über einen Leitungskanal - in welchem die elektrischen Verbindungsleitungen zum Montageelement verlegt sind - in den Innenraum des Gehäuses zu leiten. Wenn nun beim Transport und beim Betrieb der Positionsmeßeinrichtung keine Druckquelle an einem der Druckluftanschlüsse angeschlossen ist, kann in das Gehäuse eingedrungene Flüssigkeit und Dampf über den Leitungskanal in den Innenraum des Montageelementes gelangen. Durch die so eingedrungene Feuchtigkeit besteht die Gefahr eines elektrischen Kurzschlusses bei der Platine im Montageelement.

Aus dem DE-U-85 36 525 ist ebenfalls eine gekapselte Positionsmeßeinrichtung bekannt, bei der ein Druckluftanschluß vorgesehen ist. Der Leitungskanal ist mit einer Dichtmasse verschlossen und zur Druckluftzufuhr vom Montageelement in das Gehäuse ist im Montageelement ein eigener Kanal vorgesehen. Dieser Kanal beginnt an einem Adapter im Montageelement und endet im Innenraum des Gehäuses. Durch diese Kanalführung wird die Herstellung des Montageelementes und des Mitnehmers relativ schwierig.

Der Erfindung liegt die Aufgabe zugrunde, eine gekapselte Positionsmeßeinrichtung zu schaffen, bei der das Eindringen von Feuchtigkeit in den Innenraum des Montageelementes verhindert wird, und ein einfacher Aufbau des Mitnehmers und des Montageelementes gewährleistet ist.

Diese Aufgabe wird durch die kennzeichnenden Merkmale des Anspruchs 1 gelöst.

Die mit der Erfindung erzielten Vorteile bestehen insbesondere darin, daß die gekapselte Positionsmeßeinrichtung auch in einer Umgebung mit starken Flüssigkeitsnebel unabhängig vom gewählten Druckluftanschluß exakt arbeitet.

Vorteilhafte Ausbildungen der Erfindung entnimmt man den abhängigen Ansprüchen.

Die Erfindung wird nachstehend anhand der in der Zeichnung dargestellten Ausführungsformen erläutert.

Es zeigt

Figur 1   einen Teilschnitt der Seitenansicht einer gekapselten Längenmeßeinrichtung;

Figur 2   einen Teilschnitt eines weiteren Ausführungsbeispiels.

Identische Teile werden in allen Figuren mit den gleichen Bezugszeichen versehen.

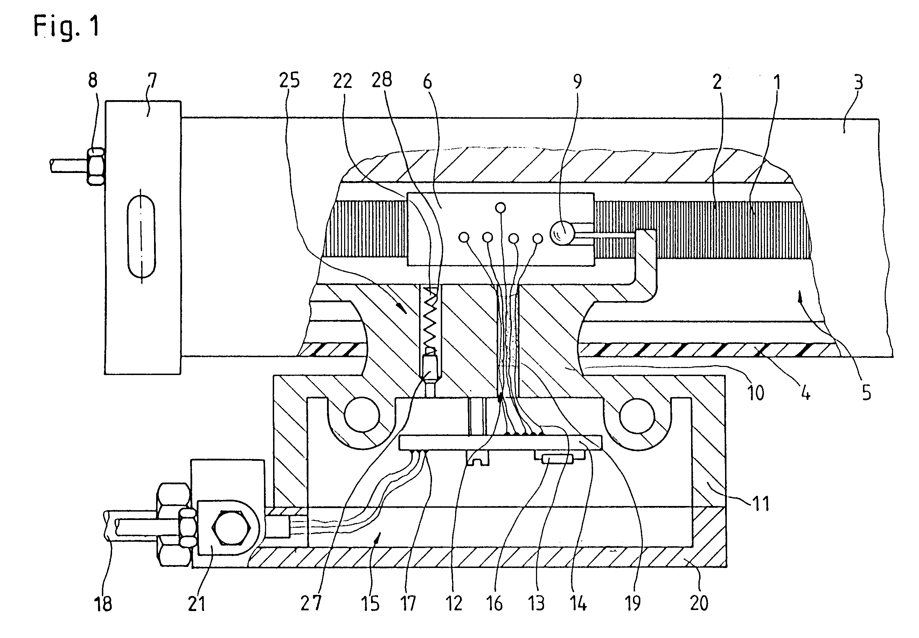

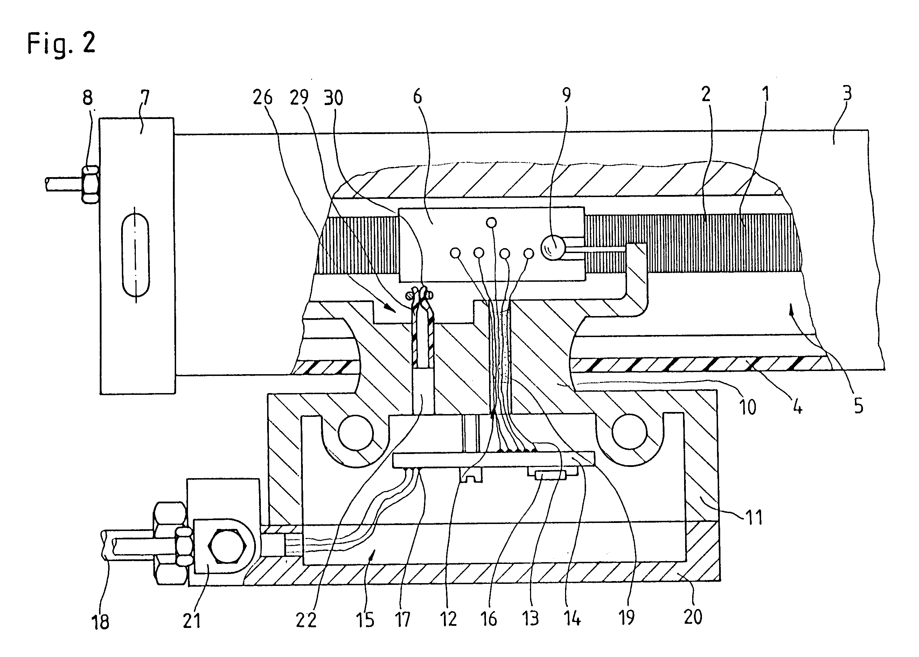

In den Figuren 1 und 2 ist eine Längenmeßeinrichtung gezeigt, deren Wirkungsweise auf dem fotoelektrischen Durchlicht-Abtastverfahren beruht. Die Längenmeßeinrichtung in Figur 1 weist eine Maßverkörperung 1 in Form von abwechselnd transparenten und opaken Bereichen gleicher Breite auf einem Träger 2 auf. Dieser Träger 2 ist auf seiner ganzen Länge auf elastische Weise im Gehäuse 3 befestigt. Der Träger 2 ist ein Glaskörper und das Gehäuse 3 ein biegesteifes, stranggezogenes Aluminiumprofil. In zwei Längsnuten des Gehäuses 3 sind flexible Dichtlippen 4 eingezogen. Diese Dichtlippen 4 schützen den Innenraum 5 des Gehäuses 3 mit der Maßverkörperung 1 und einem entlang der Maßverkörperung 1 geführten Abtastkopf 6 vor Staub und Spänen. Das Gehäuse 3 ist an den Enden mittels je eines Enddeckels 7 abgeschlossen, die gleichzeitig zum Anbau des Gehäuses 3 an eine nicht gezeigte Werkzeugmaschine dienen. Um den Innenraum 5 des Gehäuses 3 auch sicher gegen Flüssigkeiten in Form von Dämpfen und Nebeln zu schützen, ist an dem Enddeckel 7 ein erster Adapter 8 zum Anschluß einer Druckluftquelle angebracht. Der Abtastkopf 6 ist über eine in Meßrichtung spielfreie Kupplung 9 mit einem schwertförmig ausgebildeten, durch die Dichtlippen 4 hindurchgreifenden Mitnehmer 10 verbunden. Der Mitnehmer 10 ist weiterhin mit einem Montageelement 11 verbunden, das bevorzugt an ein stationäres Teil einer Werkzeug- oder Meßmaschine angebracht ist, wobei das Gehäuse 3 mit einem Maschinenteil in Verbindung steht, dessen Position oder Geschwindigkeit zu messen ist. Durch einen Leitungskanal 12 sind Signalleitungen 13 vom Abtastkopf 6 zu einer Platine 14 in den Innenraum 15 des Montageelementes 11 geführt. Auf dieser Platine 14 befinden sich elektrische Bauelemente 16 und Lötpunkte 17 für ein Anschlußkabel 18, mit dem positionsabhängige Signale zu einer Auswerteeinheit geführt werden. Der nach dem Verlegen der Signalleitungen 13 noch offene Leitungskanal 12 ist mit einer Dichtmasse 19 verschlossen. Im gezeigten Ausführungsbeispiel besteht das Montageelement 11 und der Mitnehmer 10 aus einem Druckgußteil. An einem Deckel 20 ist ein weiterer Adapter 21 zum Anschluß einer Druckquelle vorhanden. Ein Verbindungskanal 22 im Mitnehmer 10 verbindet den Innenraum 15 des Montageelementes 11 mit dem Innenraum 5 des Gehäuses 3.

Gemäß der Erfindung ist ein selbsttätig öffnendes und schließendes Ventil 25, 26 im Verbindungskanal 22 eingebracht. Das Ventil 25 in Figur 1 besteht aus einem Dichtungsstoofen 27, der von einer Druckfeder 28 gegen eine Dichtfläche des Verbindungskanals 22 in Richtung des Montageelementes 11 gedrückt wird. Die Federkonstante dieser Druckfeder 28 wird so gewählt, daß der Dichtungsstopfen 27 den Verbindungskanal 22 bei etwa 0,3 bar Überdruck im Innenraum 15 des Montageelementes 11 öffnet, und den Luftstrom in den Innenraum 5 des Gehäuses 3 ermöglicht. Zum Halten des Dichtungsstopfens 27 in dem Verbindungskanal 22 kann auch eine Feder dienen, die sich seitlich an die Innenwände des Verbindungskanals 22 andrückt. Anstelle des Dichtungsstopfens 27 kann auch eine Platte, eine Kugel oder ein Kegel aus Metall oder Kunststoff Verwendung finden. Bei geeigneter Anordnung kann auch eine Zugfeder eingesetzt werden.

Das Ventil 26 in Figur 2 wird von einem Schlauch 29 gebildet, der in den Verbindungskanal 22 eingesetzt und dessen freies Ende im Innenraum 5 des Gehäuses 3 mittels einer Federklammer 30 zugedrückt ist. Wenn im Innenraum 15 des Montageelementes 11 der Luftdruck über 0,3 bar ansteigt, wird die Kraft der Federklammer 30 überwunden, und der Schlauch 29 öffnet sich. Sobald aber der Druck wieder unter 0,3 bar absinkt, schließt sich der Schlauch 29 selbsttätig, und das Eindringen von Feuchtigkeit in den Innenraum 15 des Montageelementes 11 wird verhindert. Weitere nicht gezeigte Ausführungsformen würden darin bestehen, daß anstelle des Schlauches 29 ein am Ende geschlossenes und mit einer seitlichen Öffnung versehenes Rohr eingesetzt wird. Die seitliche Öffnung ist mit einem elastischen Ring verschlossen, der den Luftstrom vom Innenraum des Montageelementes zum Innenraum des Gehäuses nur bei Überdruck im Innenraum des Montageelementes freigibt. Weiterhin kann direkt am Ende des Verbindungskanals eine federnde Klappe in Form einer angefederten Platte oder einer elastischen Platte, wie z.B. einer Blattfeder oder einer Gummiplatte angebracht werden.

Alle erfindungsgemäßen Ausführungen haben den Vorteil, daß das Anbringen des Ventils 25, 26 im Mitnehmer 10 nur einen geringen zusätzlichen Platzbedarf bedingt. Das Ventil 25, 26 kann auch noch nachträglich leicht eingebaut werden und die Funktion ist unabhängig von der Lage des Mitnehmers 10.

Bei allen Ausführungen gilt, daß für alle Längenmeßeinrichtungen nur noch eine Ausführungsform des Mitnehmers 10 auf Lager gehalten werden muß, da ein selbsttätiges Öffnen und Schließen des Verbindungskanals 22 ermöglicht ist. Derartig ausgebildete Mitnehmer 10 können bei Längenmeßeinrichtungen ohne Adapter 8, 21 bzw. nur mit einem Adapter 8 oder 21 am Gehäuse 3 oder am Montageelement 11 bzw. mit mehreren Adaptern 8 und 21 verwendet werden. Bei den gezeigten Beispielen ist der Adapter 21 am Deckel 20 des Montageelementes 11 angebracht, mit dem Vorteil, daß für Längenmeßeinrichtungen, die ohne Adapter 21 ausgeliefert werden sollen, nur ein Deckel ohne Adapter notwendig wird. Selbstverständlich kann der Adapter aber auch am Montageelement oder am Mitnehmer selbst befestigt sein.

Das Montageelement und der Mitnehmer können in nicht gezeigter Weise auch aus zwei Bauteilen bestehen, die in geeigneter Weise miteinander verbunden sind.

Die Kapselung der Längenmeßeinrichtung muß nicht mittels der gezeigten Dichtlippen erfolgen, die Erfindung kann auch bei Positionsmeßeinrichtungen mit anderen Ausführungsformen der Kapselung, z.B. mit Stahlbandabdeckung erfolgreich angewendet werden.

Die Maßverkörperung ist in den gezeigten Beispielen eine inkrementale Teilung, sie kann aber auch als absoluter Code auf einem Träger aufgebracht sein, oder bei der Wegmessung mittels Interferenz von der Lichtwellenlänge verkörpert werden.

Die Erfindung ist weiterhin nicht auf fotoelektrische Längenmeßeinrichtungen beschränkt, sie kann auch bei fotoelektrischen Winkelmeßeinrichtungen sowie bei kapazitiven, induktiven und magnetischen Längen- und Winkelmeßeinrichtungen erfolgreich Anwendung finden.

**Patentansprüche**

1. Gekapselte Positionsmeßeinrichtung, insbesondere lichtelektrischer Art, zur Messung der Relativlage zweier zueinander beweglicher Objekte, bei der ein Gehäuse (3) zur Aufnahme einer Maßverkörperung (1) und einer diese Maßverkörperung (1) abtastenden Abtasteinheit (6) mit dem einen Objekt verbindbar ist und einen mit Dichtelementen (4) verschlossenen Schlitz in Meßrichtung aufweist, durch den ein Mitnehmer (10) in den Innenraum (5) des Gehäuses (3) hineinragt und der Mitnehmer (10) die Abtasteinheit (6) mit einem Montageelement (11) verbindet, das am anderen Objekt befestigt werden kann, und wobei zwischen dem Innenraum (15) des Montageelementes (11) und dem Innenraum (5) des Gehäuses (3) ein Verbindungskanal (22) im Mitnehmer (10) eingebracht ist, dadurch gekennzeichnet, daß mit dem Verbindungskanal (22) ein Ventil (25, 26) in Wirkverbindung steht, das den Verbindungskanal (22) zwischen dem Innenraum (15) des Montageelementes (11) und dem Innenraum (5) des Gehäuses (3) nur bei einem im Innenraum (15) des Montageelementes (11) auftretenden Überdruck vorgegebener Größe öffnet.

2. Gekapselte Positionsmeßeinrichtung nach Anspruch 1, dadurch gekennzeichnet, daß das Ventil (25) in den Verbindungskanal (22) eingesetzt ist und aus einem Dichtungsstopfen (27), einer Platte, einem Kegel oder einer Kugel besteht, der bzw. die von einer Feder (28) an Dichtflächen in Richtung des Innenraumes (15) des Montageelementes (11) andrückbar ist.

3. Gekapselte Positionsmeßeinrichtung nach Anspruch 1, dadurch gekennzeichnet, daß das Ventil ein Dichtelement (27) ist, das in den Verbindungskanal (22) eingesetzt ist und an dem eine Haltefeder (28) angebracht ist, die eine Klemmung des Dichtelementes (27) in dem Verbindungskanal (22) bewirkt, und die Klemmkraft so gewählt ist, daß sich das Dichtelement (27) bei Auftreten eines vorgegebenen Überdruckes im Innenraum (15) des Montageelementes (11) in Richtung des Innenraumes (5) des Gehäuses (3) bewegt, und somit den Verbindungskanal (22) öffnet.

4. Gekapselte Positionsmeßeinrichtung nach Anspruch 1, dadurch gekennzeichnet, daß das Ventil (26) von einem Rohrstück (29) gebildet wird, das eine Verlängerung des Verbindungskanals (22) darstellt und im Innenraum (5) des Gehäuses (3) zumindest eine Öffnung aufweist, die durch federnde Mittel (30) verschlossen ist.

5. Gekapselte Positionsmeßeinrichtung nach Anspruch 4, dadurch gekennzeichnet, daß das Rohrstück ein Schlauch (29) ist, der an seinem freien Ende mittels einer Federklammer (30) verschlossen ist.

6. Gekapselte Positionsmeßeinrichtung nach Anspruch 1, dadurch gekennzeichnet, daß das Ventil eine federnde Klappe ist, die im Innenraum des Gehäuses am Ende des Verbindungskanals am Mitnehmer angeordnet ist.

**Claims**

1. Encapsulated position measuring device, especially of the electric light type, for measuring the relative position of two objects moving relative to each other, in which a housing (3) for receiving a material measure (1) and a scanning unit (6) for scanning this material measure (1) can be connected to one of the objects, and in the measuring direction has a slot, which is closed with sealing elements (4), through which a driver (10) projects into the inner chamber (5) of the housing (3), and the driver (10) connects the scanning unit (6) to an assembly element (11) which can be fixed to the other object, and in which a connecting channel (22) in the driver (10) is arranged between the inner chamber (15) and the assembly element (11) and between the inner chamber (5) and the housing (3), characterised in that the connecting channel (22) is operatively connected to a valve (25, 26) which opens the connecting channel (22) between the inner chamber (15) of the assembly element (11) and the inner chamber (5) of the housing (3) only during the occurrence of an overpressure of predetermined size in the inner chamber (15) of the assembly element (11).

2. Encapsulated position measuring device according to claim 1, characterised in that the valve (25) is installed in the connecting channel (22) and consists of a sealing stopper (27), a plate, a valve plug or ball, which can be pressed by a spring (28) against sealing surfaces in the direction of the inner chamber (15) of the assembly element (11).

3. Encapsulated position measuring device according to claim 1, characterised in that the valve is a sealing element (27) which is installed in the connecting channel (22) and which is provided with a retaining spring (28) which causes the sealing element (27) to wedge in the connecting channel (22), and the wedging force is chosen in such a way that the sealing element (27) during the occurrence of a predetermined overpressure in the inner chamber (15) of the assembly element (11) moves in the direction of the inner chamber (5) and thereby opens the connecting channel (22).

4. Encapsulated position measuring device according to claim 1, characterised in that the valve (26) is in the form of a tubular member (29) which represents an extension of the connecting channel (22) and in the inner chamber (5) of the housing (3) has at least an opening which is closed by resilient means (30).

5. Encapsulated position measuring device according to claim 4, characterised in that the tubular member is a tube (29) which is closed at its free end by means of a clamping spring (30).

6. Encapsulated position measuring device according to claim 1, characterised in that the valve is a resilient flap which is arranged in the inner chamber of the housing on the driver at the end of the connecting channel.

**Revendications**

1. Dispositif de mesure de position étanche, notamment du type photo-électrique, pour la mesure de la position relative de deux objets pouvant se déplacer l'un par rapport à l'autre, dans lequel un boîtier (3) recevant une mesure matérialisée (1) et une unité de lecture (6) qui lit ladite mesure matérialisée (1) est relié à l'un des objets et présente une fente qui s'étend dans la direction de mesure et est fermée par un élément d'étanchéité (4), par laquelle un entraîneur (10) fait saillie dans la chambre intérieure (5) du boîtier (3) et relie l'unité de lecture (6) à un élément de montage (11) qui peut être fixé sur l'autre objet, un conduit de liaison (22) étant aménagé entre la chambre intérieure (15) de l'élément de montage (11) et la chambre intérieure (5) du boîtier (3) à l'intérieur de l'entraîneur (10), caractérisé en ce qu'une vanne (25, 26) est reliée de manière active au conduit de liaison (22), laquelle vanne n'ouvre le conduit de liaison (22) entre la chambre intérieure (15) de l'élément de montage (11) et la chambre intérieure (5) du boîtier (3) que lorsqu'une surpression de valeur prédéterminée apparaît dans la chambre intérieure (15) de l'élément de montage (11).

2. Dispositif de mesure de position étanche selon la revendication 1, caractérisé en ce que la vanne (25) est logée dans le conduit de liaison (22) et est formée d'un bouchon d'étanchéité (27), d'une plaque, d'un cône ou d'une bille qui peut être appliqué(e) par un ressort (28) sur des surfaces d'étanchéité, en direction de la chambre intérieure (15) de l'élément de montage (11).

3. Dispositif de mesure de position étanche selon la revendication 1, caractérisé en ce que la vanne est un élément d'étanchéité (27) qui est monté dans le conduit de liaison (22) et sur lequel est placé un ressort de maintient (28) qui provoque un blocage de l'élément d'étanchéité (27) dans le conduit de liaison (22), et la force de blocage est choisie de manière telle que, lors de l'apparition d'une surpression prédéterminée dans la chambre intérieure (15) de l'élément de montage (11), l'élément d'étanchéité (27) se déplace en direction de la chambre intérieure (5) du boîtier (3) et ouvre ainsi le conduit de liaison (22).

4. Dispositif de mesure de position étanche selon la revendication 1, caractérisé en ce que la vanne (26) est formée d'une partie de tube (29) qui constitue un prolongement du conduit de liaison (22) et qui présente dans la chambre intérieure (5) du boîtier (3) au moins une ouverture fermée par des moyens élastiques (30).

5. Dispositif de mesure de position étanche selon la revendication 4, caractérisé en ce que la partie de tube est un tuyau flexible (29) qui est fermé à son extrémité libre par une pince à ressort (30).

6. Dispositif de mesure de position étanche selon la revendication 1, caractérisé en ce que la vanne est un clapet élastique qui est disposé dans la chambre intérieure du boîtier, sur l'entraîneur, à l'extrémité du conduit de liaison.

Fig. 1

# Fig. 2

EP 0 297 251 B1